# EUROPEAN PATENT SPECIFICATION

(11) **EP 2 288 205 B1**
(45) Date of publication and mention of the grant of the patent: **21.03.2012**
(21) Application number: 09290629.6
(22) Date of filing: 17.08.2009
(51) Int. Cl.: H04W 76/02

(54) **Method and apparatus for roaming between HPLMN with CSoPS IWF interworking function and VPLMN supporting SRVCC**
Verfahren und Vorrichtung für Roaming zwischen einem HPLMN mit CSoPS IWF Interworkingfunktion und VPLMN, das SRVCC unterstützt
Méthode et dispositif pour l'itinérance entre un HPLMN avec CSoPS IWF fonction d'interfonctionnement et un VPLMN supportant SRVCC

(43) Date of publication of application: 23.02.2011
(73) Proprietor: Alcatel Lucent, 75007 Paris (FR)
(72) Inventor: Urie, Alistair, 75008 Paris (FR)
(74) Representative: Nicolle, Olivier

(56) References cited:
- T-MOBILE ET AL: "Cleanup of Section 5.2.2 in TR 23.879" 3GPP DRAFT; S2-090817_WAS0757_WAS0371_CSOPS_CLEANUP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Phoenix; 20090116, 16 January 2009 (2009-01-16), pages 1-17, XP050333238 [retrieved on 2009-01-16]
- VOLGA FORUM: "Voice over LTE via Generic Access; Stage 2 Specification; Phase1"[Online] 17 July 2009 (2009-07-17), pages 1-87, XP002564925 Retrieved from the Internet: URL:http://www.volga-forum.com/downloads/V oLGA-Stage2_Spec_v1.1.0.pdf>
- "Digital cellular telecommunications system (Phase 2+); Universal Mobile Telecommunications System (UMTS); LTE; Single Radio Voice Call Continuity (SRVCC); Stage 2 (3GPP TS 23.216 version 8.4.0 Release 8)" TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V8.4.0, 1 June 2009 (2009-06-01), pages 1-39, XP014044526

## Description

The present invention relates generally to roaming technical field, and more particularly to inter-domain handovers between packet and circuit switched sessions.

### BACKGROUND OF THE INVENTION

Within the daily development of wireless telecommunication standards, one of the most valuable features to be taken into account is the seamless roaming between wireless networks. For mobile subscribers, roaming offers the ability to use the mobile services outside the geographical coverage area of their home networks with the same mobile terminal. For service providers, roaming offers an opportunity to serve visitors from other networks as well as their own subscribers, leading to a profitable revenue stream.

There are many different types of wireless communications system, each having different attributes. For instance the GSM (Global System for Mobile communication) and early versions of the UMTS (Universal Mobile Telecommunication System) can only support voice over circuit switched (CS) networks. Long Term Evolution (LTE) on the other hand supports packet switched (PS) Internet Protocol (IP) based services and so voice must be carried as a Voice over IP (VoIP) over the LTE packet switched radio bearers.

Indeed, within 3GPP, the LTE was designed under the assumption that all services would be packet switched, rather than following the mixed circuit and packet switched model of earlier systems. LTE was accompanied by an evolution of the non-radio aspects of the complete system, under the term SAE (System Architecture Evolution) which include the EPC (Evolved Packet Core) network. Together, LTE and SAE comprise the EPS (Evolved Packet System), where both the core network and the radio access are fully packet switched.

EPC allows interoperation with various access technologies, in particular earlier 3GPP technologies (GSM/EDGE and UTRAN) as well as non-3GPP technologies (e.g. Wifi, CDMA2000 ®, and WiMAX). However, service continuity and short interruption times can only be guaranteed if measurements of the signals from other systems and fast handover mechanisms are integrated in the LTE radio access design. As an example, handovers between E-UTRAN Access and CDMA2000® access is presented in 3GPP TS 23.402.

As LTE radio only supports packet services, the only native voice service is VoIP (Voice over IP) based. The IMS (IP Multimedia Services Sub System) is the preferred service machinery for LTE/SAE. IMS provides communication through an IP packet switched bearer, and a VoIP message is transmitted through an IMS session.

Voice service with LTE capable terminals can be offered before high quality VoIP support is included into LTE radio and before IMS is deployed, by using the so-called CSFB (Circuit Switched fall back for LTE), where the LTE terminal will be moved to GSM, WCDMA or CDMA network to provide the same services that exist in CS network (see 3GPP TS 23.272 Circuit Switched fall back in Evolved Packet System). The user is attached to LTE network (data session) and the MSC (Mobile Switching Center) can send a paging message to the mobile. If user accepts the call it is then handed over to 2G/3G network to continue to circuit switched call setup. Using CSFB does not allow the use of the LTE data bearer in parallel with voice calls. Thus the highest data rates are not available during the voice call. Moreover, the CSFB adds some delay to the call setup process as the UE (User Equipment) must search for the target cell. With high mobility, the CSFB may also affect the call setup rate.

To keep costs reasonable, some mobile units may not support access to multiple radio interfaces simultaneously. Ordinarily, the mobile terminals are capable of casing only one technology, either GSM, UMTS or LTE. As a result, during the course of a single call, a wireless UE may roam among multiple radio access networks (RANs). Thus handover (HO) is required to maintain service continuity.

WO 2008-085373 in the name of Lucent discloses a method for controlling a handover from a VoIP IMS call to a CS call, comprising providing a CS call control message in a PS message, routing the CS call control message to a MSC in the GSM/UMTS network and initiating a handover of the VoIP call to the CS call in response to receiving the call control message.

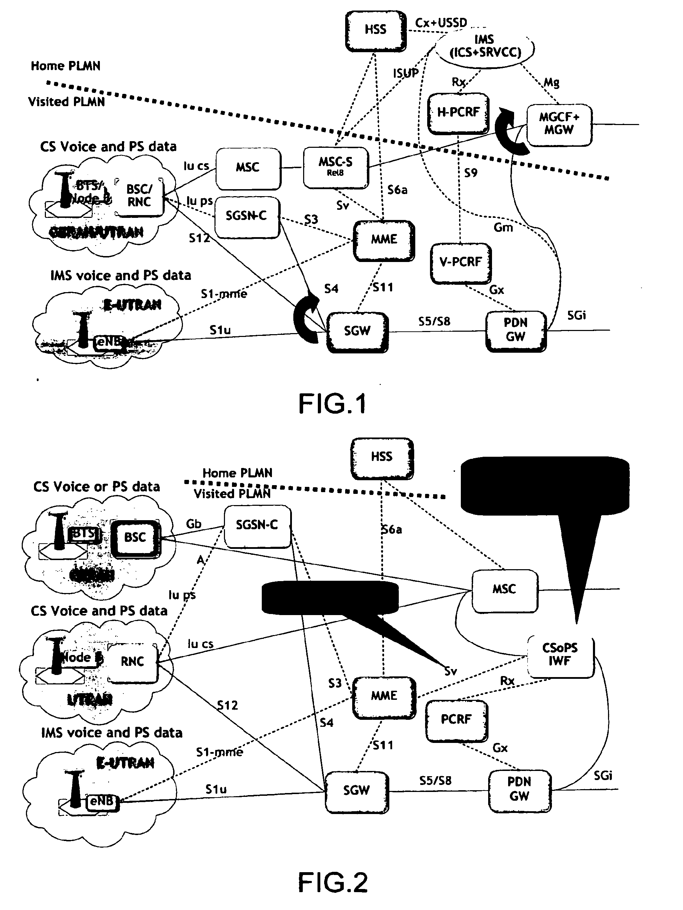

The handover functionality from VoIP to the CS domain is generally referred to as SR-VCC (Single Radio Voice Call Continuity), as defined in 3GPP TS 23.216. Figure 1 illustrates IMS with SR-VCC for roaming service which is, in turn, based on IMS Service continuity (ISC) mechanisms as defining as 3GPP TS 23.237. The selection of domain or radio access is under the network control in MSC-S (Mobile Switching Center Server). During the LTE attach procedure, the MME (Mobility Management Entity) will receive the required Session Transfer Number for SRVCC (STN-SR) from HSS (Home Subscriber Server) that is given to MSC-S via the Sv interface. LTE eNodeB first starts inter-systems measurements of the target CS system and sends the handover request to the MME which then triggers the SR-VCC procedure via the Sv interface. The MSC-S sends a response to MME, which include the necessary information for the UE to access the target GERAN/UTRAN cell. For a simultaneous voice and non-voice data connection, the handling of the non-voice bearer is carried out by the bearer splitting function in the MME. For roaming, the V-PLMN (Visited Public Land Mobile Network) controls the radio access and domain change with taking into account any related home PLMN policies.

SRVCC is a simple solution for converting and handing over an IMS VoIP call to a CS Voice call into legacy domain in the particular case of a SRVCC capable V-PLMN and IMS based H-PLMN. SRVCC allows a UE entering the edge of the VoIP coverage area with an ongoing VoIP call to be handed over to the CS network without interrupting the call.

The SR-VCC approach defined for IMS is also used in the CSoPS (CS Voice over Packet Subsystem) feature also known as VoLGA (see http://www.volga-forum.com/specifications.php, VoLGA - Requirements V1.1.1, 02/2009). The Voice over LTE via Generic Access (VoLGA) concept is to fit an operator's existing CS core network to act as a PS service delivered over LTE access network. In other words, rather than attempting to recreate CS core wireless services in IMS, CSoPS permits to simply make the existing infrastructure a packet service delivered over IP via LTE.

As represented in Figure 2, when an UE subscribed to a CSoPS-based H-PLMN is roaming in a CSoPS based V-PLMN, the handover is triggered through Sv interface from EPC to CSoPS Interworking Function IWF in V-PLMN. The call handover uses legacy MSC handover mechanism with switching between CSoPS and CS access legs implemented within the MSC platform as CS handover.

VoLGA proposes a solution for voice over LTE using a transport of circuit switched signaling and RTP/IP user plane over IP stream. The CSoPS interworking function is used to convert this to connect to a legacy MSC (see 3GPP 23.879 alternative 2).

VoLGA is suitable for use within a mobile network to serve end user within their home network or for visitors to that network with CSoPS capable terminals and that access rights and certain parameters are available from their home network. HSS must provide EPC access rights along with correct STN-SR parameters.

Furthermore, VOLGA includes mechanisms to allow CSoPS based networks to also support SRVCC mechanisms for IMS based services. In this case a Handover Selection function (HOSF) acts as a router of Sv messages passing triggers for IMS to the MSC-C and triggers for CSoPS to the IWF.

The UE uses operator policy provisioned in the UE and visited network capability information to determine if the terminal should register to use IMS, VOLGA or legacy CS voice services while roaming on a visited network.

Some LTE operators have adopted the CSoPS solution however many are not likely to and these operators would probably not provide CSoPS IWF equipment to only serve incoming CSoPS roamers. In such cases, subscribers of a CSoPS based PLMN will not be able to obtain CSoPS services in most LTE visited networks, even if these networks are SRVCC capable.

Currently, the CSoPS standardization process only assumes that roaming is possible onto other CSoPS capable networks. In all other cases, the terminal would need to either:
a) use CSFB;
b) use IMS with SR-VCC, this requiring a dual mode CSoPS/IMS terminal and also requiring that the CSoPS home operator has implemented IMS to its roaming users;
c) attach to legacy GSM/UMTS network and not use the available LTE service
d) attach to LTE network and not use voice services.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

According to one aspect of the present invention, there is provided a method for inter-domain roaming between a home network H-PLMN provided with a circuit switched over packet switched CSoPS interworking function IWF and a visited network V-PLMN supporting SR-VCC mechanisms, said method comprising providing parameters (STN-SR) to the visited network, using HSS of the home network, to allow contact between MSC of the visited network and home network located MSC; said method comprising the following steps:
- anchoring voice call in home network using CSoPS IWF and modified MSC, referred to here as a MSC+, in the home network;
- triggering handover using Sv interface from EPC to MSC in visited network;
- switching between CSoPS and CS access legs in home network for call continuity.

According to another aspect of the present invention, there is provided, in a visited network provided with a circuit switched over packet switched CSoPS interworking function IWF, the method as presented above wherein home network operator policy provisioned in the UE and visited network capability information allows the terminal to determine if it should register on the visited network based CSoPS IWF and hence if calls are to be maintained in visited network, switching between CSoPS and CS access legs being made within visited MSC as CS handover, or in the home network.

According to a further aspect of the present invention there is provided, in a home network comprising IMS Service Continuity (ISC), the method as presented above, wherein the home network UE provisioning of policy and providing parameters (STN-SR) to visited network allows the visited network SRVCC MSC to :
a) contact home network located IMS or
b) contact home network located MSC or
c) if the UE should register to the visited network CSoPS IWF and hence maintain calls in visited network,
anchoring voice in home network being made using IMS or CSoPS IWF and MSC+ in home network.

According to yet another aspect of the present invention there is provided a method as presented above, wherein call continuity uses switching between IMS or CSoPS and CS access legs implemented within IMS or MSC platform or within visited MSC.

According to another aspect of the present invention, there is provided in a visited network comprising a circuit switched CSoPS interworking function IWF, the method as presented above wherein switching between CSoPS and CS access legs is made either within visited MSC as CS handover or in the home network.

According to another aspect of the present invention, there is provided an apparatus for performing inter-domain roaming between a home network H-PLMN provided with a circuit switched CSoPS interworking function IWF and a visited network V-PLMN, said apparatus comprising
- means providing parameters (STN-SR) to the visited network, using HSS of the home network, to allow contact between MSC of the visited network and home network located MSC;
- means anchoring voice call in home network using CSoPS IWF and MSC+ of the home network;
- means triggering handover using Sv interface from EPC in visited network;
- means switching between CSoPS and CS access legs for call continuity.

### DESCRIPTION OF THE DRAWING

The objects, advantages and other features of the present invention will become more apparent from the following disclosure and claims. The following non-restrictive description of a preferred embodiment of the invention is given for the purpose of exemplification only with reference to the accompanying drawings.
Figure 1 illustrates IMS with SR-VCC for roaming service, according to prior art (see 3GPP TS 23.228 and 3GPP TS 23.216). Figure 2 illustrates the CSoPS approach defined by the VoLGA Forum building on from 3GPP TS 23.879 specification.
Figure 3 illustrates roaming services according to the invention.
Figure 4 to Fig. 7 are schematic diagram illustrating roaming procedure, according to the present invention, within different types of networks.
Figure 8 illustrates modifications to the SR-VCC specification call flow according to one embodiment of the present invention.
Figure 9 is a schematic diagram illustrating another embodiment of the present invention.

In the interest of clarity, not all features of an actual implementation are described in this specification. This is particularly the case for components and features already defined in available technical specifications.

For instance, in figures 1 to 3:
- S3, S4 and S12 interfaces are presented in TS 23.401 and TS 29.274;
- the Sv interface for interworking with legacy 3GPP CS infrastructure is presented in TS 29.280;
- the PCC (Policy and Charging Control) interface Gx, Rx and S9 are presented in TS 29.212;
- the S1mme interface in Basic System Architecture of LTE is presented in TS 36.413 (see also TS 23.401);
- the S1u, S11, S5/S8 interfaces in Basic System Architecture are presented in TS 29.274 (see also TS 23.401);
- the S6a interface in Basic System Architecture is presented in TS 29.272 (see also TS 123402);
- the SGi interface in Basic System Architecture is presented in TS 29.061;
- E-UTRAN is described in detail in TS 36.300 will additional functions listed in TS 23.401;
- MME details of functionality are described in TS 23.401;
- the functionality of PCRF (Policy and Charging Resource Function) are described in TS 23.203 with additional functionality listed in TS 23.401.

Features related to IMS are also not presented in detail, e.g. MSC (Mobile Switching Center), HSS (Home Subscriber Server), SGSN (Serving GPRS Support Node), ISUP (ISDN User Part), Gb interface between GSM/EDGE radio access network and core network. A presentation of IMS can be found in Chakraborty et al ISBN 9780470058558.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goals, such as compliance with system-related and business-related constraints. It will be appreciated that such a development effort might be time consuming but may nevertheless be a routine undertaking for those or ordinary skill in the art having the benefit of this disclosure.

### DETAILED DESCRIPTION OF ILLUSTRATIVE EMBODIMENTS

Various embodiments of methods described herein consider two PLMN; an home network, H-PLMN, that offers an end user a service subscription and a visited network, V-PLMN, that is currently offering the end-user radio coverage and connectivity. H-PLMN is CSoPS-based network, whereas V-PLMN could be a non-CSoPS-based network.

CSoPS IWF and MSC are installed in H-PLMN to support their own users while the V-PLMN provides a SR-VCC capable network, namely the Sv interface from MME and a MSC capable of supporting the SRVCC mechanism. An additional functionality is added in the H-PLMN so that the defined SR-VCC procedure may be maintained without changes in the V-PLMN. More precisely, in the H-PLMN, the handover between CSoPS and legacy CS legs of the call is managed via a modified MSC labeled MSC+.

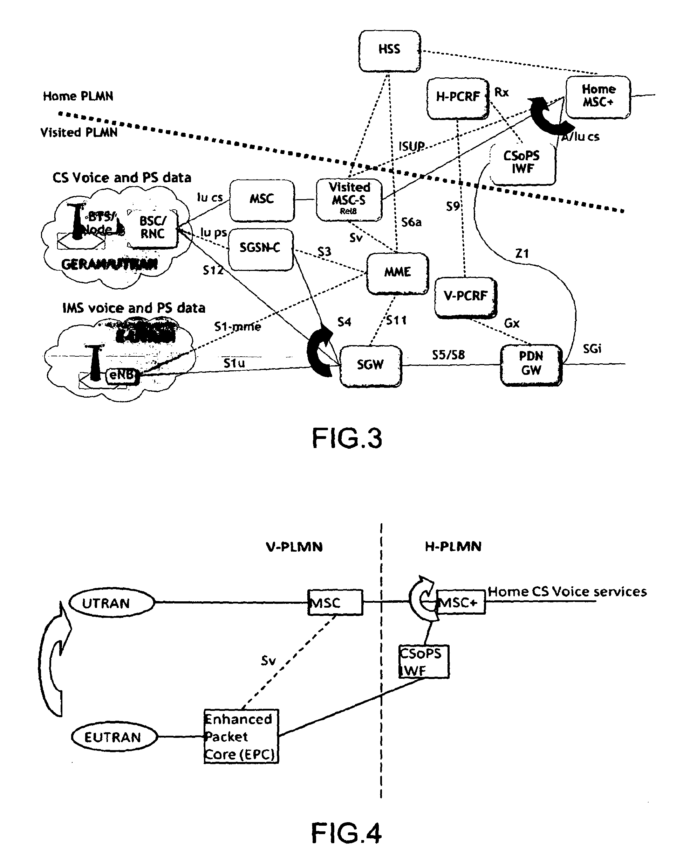

Figure 3 illustrates roaming services according to the invention. Only key H-PLMN and V-PLMN network components are represented in this figure. For instance, eNB (E-UTRAN Node B) is the radio base station that is in control of all radio related functions in the fixed part of LTE. eNB is also responsible for RRM (Radio Resource Management) and controls and analyses radio signal level measurements carried out by the UE.

The Sv interface is used with the V-PLMN to link together MME and MSC-S to trigger SR-VCC handovers to GSM/UMTS radio access. The MSC+ in the H-PLMN is able to join together the CSoPS and legacy CS legs of the call.

As represented in Figure 3 the V-PLMN part is identical to IMS with SR-VCC solution shown in figure 1. In the H-PLMN the handover between CSoPS and legacy CS legs of the call is managed via the MSC+.

Main steps during the handover process are the following.
a) Ongoing call using CSoPS with signaling and user plane is carried over visited network's LTE using the transparent Z1 interface to the CSoPS IWF which converts to legacy A or lucs interface for the MSC. Visited PCRF ordered to create dedicated LTE bearer for VoIP stream.
b) eNB triggers handover to GSM/UMTS access.
c) MME recognizes need to trigger SR-VCC process for the VoIP stream and so signals visited MSC-S via Sv interface, providing the STN-SR parameter previously provided by the home network HSS.
d) Visited network MSC-S uses "target identifier" parameters from Sv message to execute legacy handover process for either GSM or UMTS target cell.
e) Visited network MSC-S initiates session transfer using STN-SR parameter from Sv message to call home network and hence forward the new leg for the ongoing call.
f) Home network MSC+ terminates session transfer signaling from the visited network and transfers call from CSoPS sourced A or lucs interface to incoming leg from visited network MSC-S.

Since steps b) to e) are identical to those used in the SR-VCC process, no changes are required in the V-PLMN network.

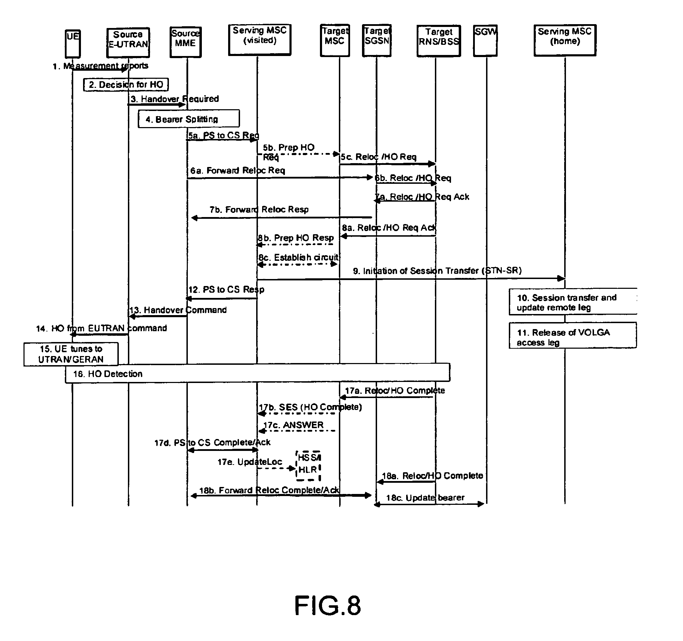

Figure 8 illustrates the changes to the SR-VCC specification call flow figure as currently defined in 3GPP TS 23.216 release 8, section 6.2.2.2 where the steps 10 and 11 should be modified to read:
"10. During the execution of the Session Transfer procedure the Home MSC-C at the remote end is updated. The downlink flow of CS Stream is switched towards the CS access leg at this point.
11. The source CSoPS A/lu access leg is released according to TS 23.009"

According to one embodiment, the MSC itself is extended to support the session transfer process outline above and described in figure 8. The MSC+ remains in circuit throughout the call however call control would have been transferred to the visited network MSC-S after handover and so the MSC+ would only act as a trunk switch. This approach is shown within figure 3.

With reference to figure 4, the handover key steps are as following:
- the home network HSS provides parameter (STN-SR) to visited network to allow MSC to contact home network session transfer function;
- voice call anchored in Home network using CSoPS IWF and enhanced MSC;
- handover triggered using "Sv" interface from EPC to MSC in Visited network;
- call continuity uses ISC like mechanism with switching between CSoPS and CS access legs implemented within enhanced MSC platform acting as session transfer function.

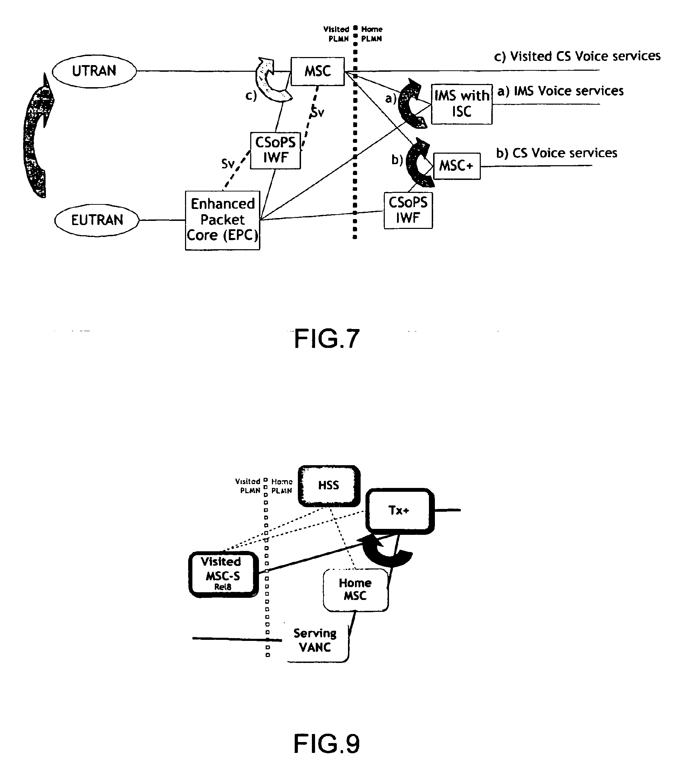

According to another embodiment, the session transfer function within the MSC+ is actually implemented using a modified Trunk Exchange. The actual home MSC would then only be used during the CSoPS part of the call and would be released by the modified trunk Exchange after the successful completion of the handover process. The modified trunk exchange would act as permanent anchor for all calls (both MO and MT), receive ISUP message from visited MSC-S and trigger "access leg transfer" from home MSC to visited MSC-S and finally would issue the call release trigger to home MSC. This embodiment is illustrated in figure 9.

In another embodiment, the enhanced Trunk exchange (TX+) function is performed using a standalone IMS platform using an ISC like process with a new mechanism added to the 3GPP release 8 23.237 specification to support CS to CS service continuity.

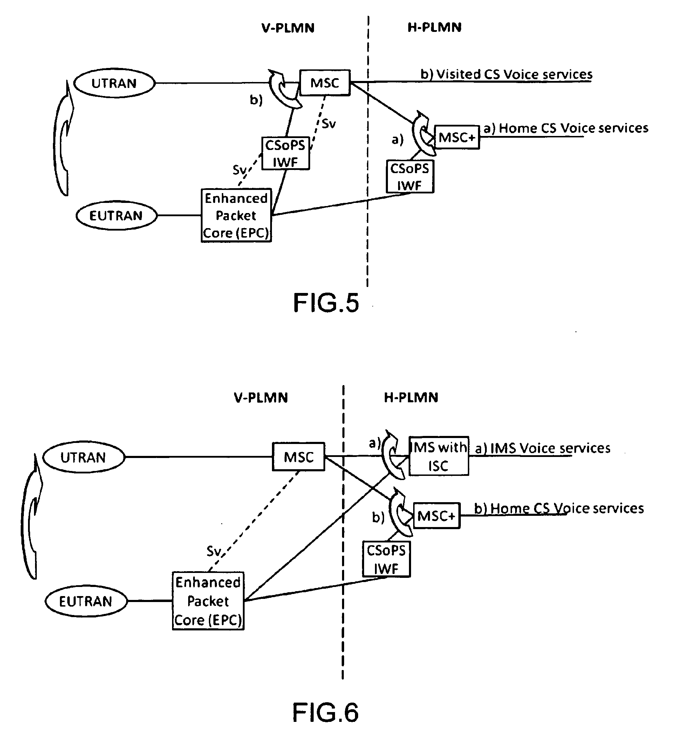

With reference now to figure 5 another embodiment is illustrated where both H-PLMN and V-PLMN based CSoPS may be provided with the combined handover procedure comprises the following steps:
- home network operator policy provisioned in the UE determines if the terminal has registered in either a) the home network CSoPS IWF or b) the visited network CSoPS IWF;
- handover is triggered using Sv interface from EPC to IWF in visited network which forwards to the visited network MSC using HOSF mechanism if not associated with a visited network attached CSoPS terminal;
- call continuity uses ISC like mechanism with switching between a) CSoPS and CS access legs implemented within home network enhanced MSC platform or b) CSoPS and CS access legs within visited network MSC as CS HO.

Figure 6 depicts another roaming embodiment where a home network may provide both IMS and CSoPS based services comprising the following steps:
- HSS provides parameter (STN-SR) to visited network to allow visited network MSC to contact home network located a) IMS or b) MSC;
- voice call anchored in Home network using either a) IMS or b) CSoPS IWF and enhanced MSC;
- handover triggered using "Sv" interface from EPC to MSC in Visited network;
- call continuity uses ISC like mechanism with switching between a) IMS or b) CSoPS and CS access legs implemented within enhanced a) IMS or b) MSC platform.

Figure 7 shows another roaming embodiment where a home network may provide both IMS and CSoPS based services and the visited network also provides local CSoPS based services comprising the following steps:
- home network operator policy provisioned in the UE determines if the terminal has registered in either a) the home network IMS, b) the home network CSoPS IWF or c) the visited network CSoPS IWF
- HSS provides parameter (STN-SR) to visited network to allow MSC to contact home network located a) IMS or b) MSC;
- voice call anchored in Home network using either a) IMS or b) CSoPS IWF and enhanced MSC or c) MSC in Visited network;
- handover triggered using "Sv" interface from EPC to MSC in Visited network;
- call continuity uses ISC like mechanism with switching between a) IMS or b) CSoPS and CS access legs implemented within enhanced a) IMS or b) home network MSC platform or c) within visited network MSC.

The invention allows a CSoPS operator to offer service to their own user while roaming on networks that do not support CSoPS. No specific CSoPS equipment is required in the visited network to support incoming roamers.

## Claims

1. A method for inter-domain roaming between a home network H-PLMN provided with a circuit switched over packet switched CSoPS interworking function IWF and a visited network V-PLMN supporting SRVCC mechanisms, said method comprising providing parameters (STN-SR) to the visited network, using HSS of the home network, to allow contact between MSC of the visited network and home network located MSC; said method being **characterized in that** it comprises the following steps:
- anchoring voice call in home network using CSoPS IWF and a modified MSC labeled MSC+, whereby the MSC+ in the H-PLMN is able to join together the CSoPs and legacy CS legs of the call, in the home network;
- triggering handover using Sv interface from EPC to MSC in visited network;
- switching between CSoPS and CS access legs in home network for call continuity.

2. The method according to claim 1 for use in a visited network provided with a circuit switched over packet CSoPS switched interworking function IWF, wherein home network provisioned UE policy and visited network capability information is used to determine if the terminal should register on the visited network CSoPS IWF, with switching between CSoPS and CS access legs being made within visited MSC as CS handover.

3. The method according to claim 1, for use in a home network comprising IMS Service Continuity (ISC) wherein the home network providing parameters (STN-SR) to visited network allows the visited network SRVCC capable MSC to
a) contact home network located IMS or
b) contact home network located MSC
anchoring voice in home network being made using IMS or CSoPS IWF and MSC+ in home network.

4. The method according to claims 2 and 3, wherein call continuity uses switching between IMS or CSoPS and CS access legs implemented within IMS or MSC platform or within visited MSC.

5. The method according to claim 2, for use in a visited network comprising a circuit switched over packet switched CSoPS interworking function IWF wherein switching between CSoPS and CS access legs is made within visited MSC as CS handover.

6. An apparatus for performing inter-domain roaming between a home network H-PLMN provided with a circuit switched over packet switched CSoPS interworking function IWF and a visited network V-PLMN, said apparatus comprising
- means providing parameters (STN-SR) to the visited network, using HSS of the home network, to allow contact between MSC of the visited network and home network located MSC;
- means anchoring voice call in home network using CSoPS IWF and a modified MSC labeled MSC+, whereby the MSC+ in the H-PLMN is able to join together the CSoPS and legacy CS legs of the call, in the home network;
- means triggering handover using Sv interface from EPC in visited network;
- means switching between CSoPS and CS access legs in home network for call continuity.

## Patentansprüche

1. Verfahren zur Durchführung von Roaming in verschiedenen Domänen zwischen einem Heimatnetzwerk H-PLMN, welches über eine Zusammenwirkungsfunktion IWF für leitungsvermittelte Sprachverbindungen über paketorientierte Teilsysteme CSoPS verfügt, und einem besuchten Netzwerk V-PLMN, welches SRVCC-Mechanismen unterstützt, wobei das besagte Verfahren das Bereitstellen von Parametern (STN-SR) an das besuchte Netzwerk unter Verwendung des HSS des Heimatnetzwerks umfasst, um den Kontakt zwischen der MSC des besuchten Netzwerks und der im Heimatnetzwerk angeordneten MSC zu ermöglichen; wobei das besagte Verfahren **dadurch gekennzeichnet ist, dass** es die folgenden Schritte umfasst:
- Verankern der Sprachverbindung im Heimatnetzwerk unter Verwendung der CSoPS-IWF und einer veränderten MSC, als MSC+ bezeichnet, wobei die MSC+ im H-PLMN fähig ist, das CSoPS und die Abschnitte alten CS-Verbindung im Heimatnetzwerk zusammenzufügen;
- Auslösen des Handovers unter Verwendung der Sv-Schnittstelle vom EPC zur MSC in dem besuchten Netzwerk;
- Schalten zwischen dem CSoPS und den CS-Zugangsabschnitten im Heimatnetzwerk für die Aufrechterhaltung der Verbindung.

2. Verfahren nach Anspruch 1 für die Verwendung in einem besuchten Netzwerk, welches über eine Zusammenwirkungsfunktion IWF für leitungsvermittelte Sprachverbindungen über paketorientierte Teilsysteme CSoPS verfügt, wobei eine vom Heimatnetzwerk bereitgestellte Benutzergerät-Richtlinie und Informationen über die Fähigkeiten des besuchten Netzwerks verwendet werden, um zu bestimmen, ob sich das Endgerät bei der CSoPS-IWF des besuchten Netzwerks anmelden soll, wobei das Schalten zwischen dem CSoPS und den CS-Zugangsabschnitten innerhalb der besuchten MSC als CS-Handover erfolgt.

3. Verfahren nach Anspruch 1 für die Verwendung in einem Heimatnetzwerk mit IMS-Dienstekontinuität (ISC), wobei das Heimatnetzwerk, welches Parameter (STN-SR) an des besuchte Netzwerk bereitstellt, es der SRVCC-fähigen MSC des besuchten Netzwerk ermöglicht,
a) das im Heimatnetzwerk angeordnete IMS zu kontaktieren, oder
b) die im Heimatnetzwerk angeordnete MSC zu kontaktieren,
wobei die Verankerung der Sprachverbindung im Heimatnetzwerk unter Verwendung des IMS oder der CSoPS-IWF und der MSC+ im Heimatnetzwerk erfolgt.

4. Verfahren nach den Ansprüchen 2 und 3, wobei die Aufrechterhaltung der Verbindung durch das Schalten zwischen dem IMS oder dem CSoPS und den innerhalb des IMS oder der MSC-Plattform oder innerhalb der besuchten MSC implementierten CS-Zugangsabschnitten erfolgt.

5. Verfahren nach Anspruch 2 für die Verwendung in einem besuchten Netzwerk, welches über eine Zusammenwirkungsfunktion IWF für leitungsvermittelte Sprachverbindungen über paketorientierte Teilsysteme CSoPS verfügt, wobei das Schalten zwischen dem CSoPS und den CS-Zugangsabschnitten innerhalb der besuchten MSC als CS-Handover erfolgt.

6. Vorrichtung zum Durchführen von Roaming in verschiedenen Domänen zwischen einem Heimatnetzwerk H-PLMN, welches über eine Zusammenwirkungsfunktion IWF für leitungsvermittelte Sprachverbindungen über paketorientierte Teilsysteme CSoPS verfügt, und einem besuchten Netzwerk V-PLMN, wobei die besagte Vorrichtung umfasst:
- Mittel zum Bereitstellen von Parametern (STN-SR) an das besuchte Netzwerk unter Verwendung des HSS des Heimatnetzwerks, um den Kontakt zwischen der MSC des besuchten Netzwerks und der im Heimatnetzwerk angeordneten MSC zu ermöglichen;
- Mittel zum Verankern der Sprachverbindung im Heimatnetzwerk unter Verwendung der CSoPS-IWF und einer veränderten MSC, als MSC+ bezeichnet, wobei die MSC+ im H-PLMN fähig ist, das CSoPS und die Abschnitte der alten CS-Verbindung im Heimatnetzwerk zusammenzufügen;
- Mittel zum Auslösen des Handovers unter Verwendung der Sv-Schnittstelle vom EPC in dem besuchten Netzwerk;
- Mittel zum Schalten zwischen CSoPS und CS-Zugangsabschnitten im Heimatnetzwerk für die Aufrechterhaltung der Verbindung.

## Revendications

1. Procédé destiné à une itinérance inter-domaines entre un réseau mobile terrestre public de rattachement (H-PLMN) comportant une fonction d'interfonctionnement à commutation de circuit sur commutation de paquets (CSoPS) (IWF) et un réseau mobile terrestre public visité (V-PLMN) prenant en charge des mécanismes SRVCC, ledit procédé comprenant la fourniture de paramètres (STN-SR) au réseau visité, l'utilisation du serveur d'abonné résidentiel (HSS) du réseau de rattachement, afin de permettre un contact entre le centre de commutation mobile (MSC) du réseau visité et le MSC situé sur le réseau de rattachement ; ledit procédé étant **caractérisé en ce qu'**il comprend les étapes suivantes :
- ancrer un appel vocal dans un réseau de rattachement en utilisant la fonction d'interfonctionnement CSoPS et un MSC modifié appelé MSC+, le MSC+ dans le H-PLMN étant capable de relier les branches CSoPS et CS patrimonial de l'appel, dans le réseau de rattachement ;
- déclencher un transfert intercellulaire en utilisant une interface Sv entre l'EPC et le MSC dans le réseau visité ;
- commuter entre des branches d'accès CSoPS et CS dans le réseau de rattachement pour une continuité d'appel.

2. Procédé selon la revendication 1, destiné à être utilisé dans un réseau visité comportant une fonction d'interfonctionnement à commutation de circuit sur commutation de paquets (CsoPS) (IWF), dans lequel une politique d'équipement d'utilisateur fournie par le réseau de rattachement et des informations sur la capacité du réseau visité sont utilisées pour déterminer si le terminal doit s'enregistrer dans la fonction d'interfonctionnement CSoPS du réseau visité, la commutation entre des branches d'accès CSoPS et CS étant réalisée dans le transfert intercellulaire MSC visité agissant comme CS.

3. Procédé selon la revendication 1, destiné à être utilisé dans un réseau de rattachement comprenant la continuité de service de sous-système multimédia IP (IMS) (ISC), dans lequel la fourniture de paramètres (STN-SR) par le réseau de rattachement au réseau visité permet au réseau visité MSC compatible avec SRVCC de
a) contacter l'IMS situé sur le réseau de rattachement ou de
b) contacter le MSC situé sur le réseau de rattachement
l'ancrage d'un appel vocal dans un réseau de rattachement étant réalisé en utilisant l'IMS ou la fonction d'interfonctionnement CSoPS et le MSC+ dans un réseau de rattachement.

4. Procédé selon les revendications 2 et 3, dans lequel la continuité d'appel utilise la commutation entre des branches d'accès IMS ou CSoPS et CS mise en oeuvre à l'intérieur de la plate-forme d'IMS ou de MSC ou à l'intérieur du MSC visité.

5. Procédé selon la revendication 2 destiné à être utilisé dans un réseau visité comprenant une fonction d'interfonctionnement à commutation de circuit sur commutation de paquets (CsoPS) (IWF), dans lequel la commutation entre des branches d'accès CSoPS et CS est réalisée à l'intérieur du transfert intercellulaire MSC visité agissant comme CS.

6. Appareil pour exécuter une itinérance inter-domaines entre un réseau H-PLMN de rattachement comportant une fonction d'interfonctionnement à commutation de circuit sur commutation de paquets (CsoPS) (IWF) et un réseau visité V-PLMN, ledit appareil comprenant
- moyens pour fournir des paramètres (STN-SR) au réseau visité, en utilisant le HSS du réseau de rattachement, afin de permettre un contact entre le MSC du réseau visité et le MSC situé sur le réseau de rattachement ;
- moyens pour ancrer un appel vocal dans un réseau de rattachement en utilisant la fonction d'interfonctionnement CSoPS et un MSC modifié appelé MSC+, le MSC+ dans le H-PLMN étant capable de relier les branches CSoPS et CS patrimonial de l'appel dans le réseau de rattachement ;
- moyens pour déclencher un transfert intercellulaire en utilisant une interface Sv à partir de l'EPC dans un réseau visité ;
- moyens pour commuter entre des branches d'accès CSoPS et CS dans le réseau de rattachement pour une continuité d'appel.
